# EUROPEAN PATENT APPLICATION

(11) **EP 4 458 904 A1**
(43) Date of publication of application: **06.11.2024**
(21) Application number: 22915833.2
(22) Date of filing: 20.12.2022
(51) Int. Cl.: C08L 67/02, B32B 27/40, C08K 5/13, C08L 27/06, C08L 101/00

(54) **PLASTICIZER COMPOSITION, RESIN COMPOSITION, RESIN MOLDED BODY, AND LAMINATE**

(30) Priority: 27.12.2021 JP 2021213402
(71) Applicant: Zeon Corporation, Tokyo 100-8246 (JP)
(72) Inventor: NISHIMURA Shota, Tokyo 100-8246 (JP); SAKAMOTO Kei, Tokyo 100-8246 (JP)
(74) Representative: Maiwald GmbH
(86) International application number: PCT/JP2022/046963
(87) International publication number: WO 2023/127609

(57) **Abstract**

Provided is a plasticizer composition with which it is possible to produce a resin composition that can form a resin molded product having excellent adhesiveness to a foamed polyurethane molded product. The plasticizer composition contains a polyester plasticizer and either or both of a phenol represented by formula (I), shown below, and a modified product thereof. In formula (I), X is a hydrogen atom or a carboxy group, Y is a hydrogen atom or a hydroxy group, Z is a hydrogen atom or a methyl group, and R¹ is an optionally substituted hydrocarbon group.

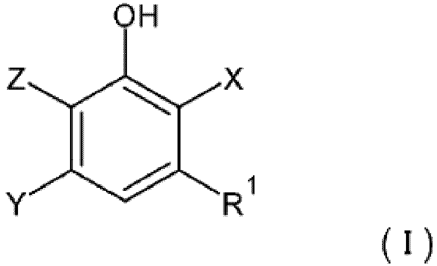

## Description

### TECHNICAL FIELD

The present disclosure relates to a plasticizer composition, a resin composition, a resin molded product, and a laminate.

### BACKGROUND

Resins such as vinyl chloride resins are used in a variety of applications due to generally having excellent characteristics in terms of cold resistance, heat resistance, oil resistance, and so forth.

Specifically, automobile interior materials such as a surface skin formed of a resin molded product in which a resin such as a vinyl chloride resin is used and a laminate obtained by lining a surface skin formed of the aforementioned resin molded product with a foamed product such as foamed polyurethane are used in the formation of automobile interior components such as automobile instrument panels and door trims.

A resin molded product that constitutes a surface skin of an automobile interior component such as an automobile instrument panel is produced, for example, by performing molding by a powder molding method such as powder slush molding with respect to a resin composition that contains a resin such as a vinyl chloride resin, a plasticizer, and additives (for example, refer to Patent Literature (PTL) 1).

As one specific example, a vinyl chloride resin molded product is produced in PTL 1 through powder slush molding of a vinyl chloride resin composition that contains vinyl chloride resin particles, a plasticizer such as a polyester plasticizer, and additives such as a hydrotalcite stabilizer, a zeolite stabilizer, and a β-diketone.

### CITATION LIST

### Patent Literature

PTL 1: JP2012-197394A

### SUMMARY

### (Technical Problem)

In a situation in which a molded product is formed by lining a resin molded product with a foamed product of polyurethane (hereinafter, also referred to as a "foamed polyurethane molded product"), it is desirable for the resin molded product and the foamed polyurethane molded product to adhere well without peeling apart.

However, when using the resin composition of the conventional technique described above in which a polyester plasticizer is used as a plasticizer, there is room for improvement of adhesiveness of a formed resin molded product to a foamed polyurethane molded product.

Accordingly, one object of the present disclosure is to provide a plasticizer composition with which it is possible to produce a resin composition that can form a resin molded product having excellent adhesiveness to a foamed polyurethane molded product.

Another object of the present disclosure is to provide a resin composition that can form a resin molded product having excellent adhesiveness to a foamed polyurethane molded product.

Another object of the present disclosure is to provide a resin molded product having excellent adhesiveness to a foamed polyurethane molded product.

Another object of the present disclosure is to provide a laminate including this resin molded product.

### (Solution to Problem)

The inventors conducted diligent investigation with the aim of solving the problem set forth above. The inventors discovered that by using a plasticizer composition that contains a polyester plasticizer and either or both of a phenol having a specific structure and a modified product thereof, it is possible to cause a resin molded product formed using a resin composition containing the plasticizer composition to display excellent adhesiveness to a foamed polyurethane molded product. In this manner, the inventors completed the present disclosure.

Specifically, with the aim of advantageously solving the problem set forth above, [1] a presently disclosed plasticizer composition comprises: a polyester plasticizer; and either or both of a phenol represented by formula (I), shown below, and a modified product thereof, 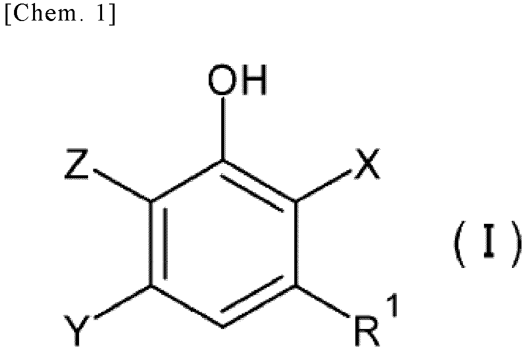 given that in formula (I), X is a hydrogen atom or a carboxy group, Y is a hydrogen atom or a hydroxy group, Z is a hydrogen atom or a methyl group, and R¹ is an optionally substituted hydrocarbon group.

By producing a resin composition using a plasticizer composition that contains a polyester plasticizer and either or both of a phenol having the specific structure set forth above and a modified product thereof in this manner, it is possible for a resin molded product that is formed using the resin composition to display excellent adhesiveness to a foamed polyurethane molded product.

[2] In the plasticizer composition according to the foregoing [1], R¹ is preferably a chain hydrocarbon group having a carbon number of not less than 5 and not more than 25.

When R¹ in formula (I) is a chain hydrocarbon group having the specific carbon number set forth above, adhesiveness to a foamed polyurethane molded product of a resin molded product that is formed using a resin composition containing the plasticizer composition can be further improved.

[3] The plasticizer composition according to the foregoing [1] or [2] preferably comprises an alkylene oxide modified product of the phenol.

By using an alkylene oxide modified product of the phenol, it is possible to further improve adhesiveness to a foamed polyurethane molded product of a resin molded product that is formed using a resin composition containing the plasticizer composition, and it is also possible to improve heat shrinkage resistance and tensile characteristics at low temperature of the resin molded product.

[4] In the plasticizer composition according to the foregoing [3], the alkylene oxide modified product of the phenol may, for example, have a hydroxy group in formula (I) substituted by a functional group represented by formula (II): -(O-R²)ₙ-OH, given that in formula (II), R² is an alkylene group and n is an integer of 1 or more.

[5] In the plasticizer composition according to the foregoing [4], R² is preferably an ethylene group.

When R² in formula (II) is an ethylene group, adhesiveness to a foamed polyurethane molded product of a resin molded product that is formed using a resin composition containing the plasticizer composition can be further improved, and heat shrinkage resistance and tensile characteristics at low temperature of the resin molded product can also be improved.

[6] In the plasticizer composition according to the foregoing [4] or [5], n is preferably an integer of not less than 1 and not more than 30.

When the number of repetitions n of an alkylene oxide unit (-(O-R²)-) in the alkylene oxide modified product of the phenol is within the specific range set forth above, adhesiveness to a foamed polyurethane molded product of a resin molded product that is formed using a resin composition containing the plasticizer composition can be further improved, and heat shrinkage resistance and tensile characteristics at low temperature of the resin molded product can also be improved.

[7] In the plasticizer composition according to any one of the foregoing [1] to [6], the polyester plasticizer preferably includes an adipic acid polyester.

By using an adipic acid polyester as the polyester plasticizer, it is possible to improve heat shrinkage resistance of a resin molded product that is formed using a resin composition containing the plasticizer composition.

[8] In the plasticizer composition according to any one of the foregoing [1] to [7], content of the phenol and the modified product thereof is preferably not less than 1 part by mass and not more than 20 parts by mass relative to 100 parts by mass of the polyester plasticizer.

When the content of the phenol and the modified product thereof in the plasticizer composition is within the specific range set forth above, sufficiently high heat shrinkage resistance of a formed resin molded product can be ensured while also further improving adhesiveness of the resin molded product to a foamed polyurethane molded product and also improving tensile characteristics at low temperature of the resin molded product.

Moreover, with the aim of advantageously solving the problem set forth above, [9] a presently disclosed resin composition comprises: a resin; and the plasticizer composition according to any one of the foregoing [1] to [8].

With a resin composition that contains the plasticizer composition set forth above in this manner, it is possible to form a resin molded product that can display excellent adhesiveness to a foamed polyurethane molded product.

[10] In the resin composition according to the foregoing [9], the resin preferably contains a halogen.

[11] In the resin composition according to the foregoing [9] or [10], the resin preferably has a glass-transition temperature of not lower than 50°C and not higher than 100°C.

Note that the "glass-transition temperature" of a resin referred to in the present disclosure can be measured by a differential scanning calorimeter (DSC) in accordance with JIS K 7121.

[12] In the resin composition according to any one of the foregoing [9] to [11], the resin preferably includes a vinyl chloride resin.

[13] In the resin composition according to any one of the foregoing [9] to [12], content of the polyester plasticizer is preferably not less than 30 parts by mass and not more than 200 parts by mass relative to 100 parts by mass of the resin.

When the content of the polyester plasticizer relative to 100 parts by mass of the resin in the resin composition is within the specific range set forth above, heat shrinkage resistance of a resin molded product that is formed using the resin composition can be improved while also ensuring sufficient high adhesiveness of the resin molded product to a foamed polyurethane molded product.

[14] In the resin composition according to any one of the foregoing [9] to [13], content of the phenol and the modified product thereof is preferably not less than 1 part by mass and not more than 20 parts by mass relative to 100 parts by mass of the resin.

When the content of the phenol and the modified product thereof in the resin composition is within the specific range set forth above, sufficiently high heat shrinkage resistance of a formed resin molded product can be ensured while also further improving adhesiveness of the resin molded product to a foamed polyurethane molded product and also improving tensile characteristics at low temperature of the resin molded product.

[15] The resin composition according to any one of the foregoing [9] to [14] is preferably used in powder molding.

By using the resin composition in powder molding, it is easy to obtain a resin molded product that can be used well as an automobile interior material such as a surface skin for an automobile instrument panel, for example.

[16] The resin composition according to any one of the foregoing [9] to [15] is preferably used in powder slush molding.

By using the resin composition in powder slush molding, it is even easier to obtain a resin molded product that can be used well as an automobile interior material such as a surface skin for an automobile instrument panel, for example.

Furthermore, with the aim of advantageously solving the problem set forth above, [17] a presently disclosed resin molded product is obtained through molding of the resin composition according to any one of the foregoing [9] to [16].

A resin molded product that is obtained through molding of the resin composition set forth above in this manner can be used well as an automobile interior material as a result of having excellent adhesiveness to a foamed polyurethane molded product.

[18] The resin molded product according to the foregoing [17] is preferably for a surface skin of an automobile instrument panel.

By using the presently disclosed resin molded product as a surface skin of an automobile instrument panel, it is possible to produce an automobile instrument panel that includes a surface skin having excellent adhesiveness to a foamed polyurethane molded product.

Also, with the aim of advantageously solving the problem set forth above, [19] a presently disclosed laminate comprises: a foamed polyurethane molded product; and the resin molded product according to the foregoing [17] or [18].

A laminate that includes a foamed polyurethane molded product and the resin molded product set forth above has good adhesion of the resin molded product and the foamed polyurethane molded product and has a resin molded product part that is not easily peeled off.

[20] The laminate according to the foregoing [19] is preferably for an automobile instrument panel.

When the presently disclosed laminate is used as an automobile instrument panel in this manner, a surface skin and a foamed polyurethane molded product of the produced automobile instrument panel can adhere well and not easily be peeled apart.

### (Advantageous Effect)

According to the present disclosure, it is possible to provide a plasticizer composition with which it is possible to produce a resin composition that can form a resin molded product having excellent adhesiveness to a foamed polyurethane molded product.

Moreover, according to the present disclosure, it is possible to provide a resin composition that can form a resin molded product having excellent adhesiveness to a foamed polyurethane molded product.

Furthermore, according to the present disclosure, it is possible to provide a resin molded product having excellent adhesiveness to a foamed polyurethane molded product.

Also, according to the present disclosure, it is possible to provide a laminate including this resin molded product.

### DETAILED DESCRIPTION

The following provides a detailed description of embodiments of the present disclosure.

The presently disclosed plasticizer composition can be used, for example, in production of the presently disclosed resin composition.

Moreover, the presently disclosed resin composition can be used, for example, in formation of the presently disclosed resin molded product. Furthermore, a resin molded product that is formed using the presently disclosed resin composition can suitably be used, for example, as an automobile interior material such as a surface skin included in an automobile interior component such as an automobile instrument panel or door trim.

Also, the presently disclosed resin molded product can be used, for example, in formation of the presently disclosed laminate. Moreover, a laminate formed using the presently disclosed resin molded product can suitably be used, for example, as an automobile interior material used in production of an automobile interior component such as an automobile instrument panel or door trim.

### (Resin composition)

A feature of the presently disclosed resin composition is that it contains: (a) a resin; and (b) the presently disclosed plasticizer composition (hereinafter, also referred to simply as the "(b) plasticizer composition").

Note that the presently disclosed resin composition may optionally further contain additives other than the aforementioned (a) resin and (b) plasticizer composition.

Moreover, a resin molded product that is formed using the presently disclosed resin composition has excellent adhesiveness to a foamed polyurethane molded product. Consequently, in a situation in which a resin molded product formed using the presently disclosed resin composition is lined with a foamed polyurethane molded product, it is possible to form a laminate in which the resin molded product and the foamed polyurethane molded product adhere well and are not easily peeled apart.

Furthermore, in a situation in which a laminate in which a resin molded product formed using the presently disclosed resin composition is lined with a foamed polyurethane molded product is produced, it is possible to improve heat shrinkage resistance of the resin molded product in the laminate.

In addition, a resin molded product that is formed using the presently disclosed resin composition also has excellent tensile characteristics (for example, tensile elongation, tensile strength, etc.) at low temperature.

Consequently, by using the presently disclosed resin composition, it is possible to obtain a resin molded product that is suitable as an automobile interior material, such as a surface skin for an automobile instrument panel or a surface skin for a door trim, that adheres well and is not easily peeled off in a situation in which it is lined with a foamed polyurethane molded product.

Note that from a viewpoint of easily obtaining a resin molded product that can be used well as an automobile interior material using the presently disclosed resin composition, for example, the presently disclosed resin composition is preferably used in powder molding, and is more preferably used in powder slush molding.

### <(a) Resin>

A known resin can be used as the (a) resin without any specific limitations so long as the desired effects according to the present disclosure are achieved.

Note that the (a) resin that is contained in the presently disclosed resin composition is a different component to subsequently described plasticizers ((b1) polyester plasticizer, etc.) that are contained in the (b) plasticizer composition and additives that are optional components.

The (a) resin preferably has a glass-transition temperature of not lower than 50°C and not higher than 100°C.

Moreover, it is preferable to use a resin that contains a halogen as the (a) resin, more preferable to use a resin that contains fluorine or a resin that contains chlorine as the (a) resin, even more preferable to use a resin that contains chlorine as the (a) resin, and particularly preferable to use a vinyl chloride resin as the (a) resin.

The proportional content of the vinyl chloride resin in the (a) resin is not specifically limited but is preferably 50 mass% or more, more preferably 70 mass% or more, even more preferably 90 mass% or more, and particularly preferably 100 mass%.

### «Vinyl chloride resin»

A particulate vinyl chloride resin is normally used as the vinyl chloride resin. For example, one type or two or more types of vinyl chloride resin particles can be included as the vinyl chloride resin, and one type or two or more types of vinyl chloride resin fine particles can optionally be further included as the vinyl chloride resin. In particular, the vinyl chloride resin preferably includes at least vinyl chloride resin particles, and more preferably includes vinyl chloride resin particles and vinyl chloride resin fine particles.

The vinyl chloride resin can be produced by a conventionally known production method such as suspension polymerization, emulsion polymerization, solution polymerization, or bulk polymerization.

In the present specification, the term "resin particles" is used to refer to particles having a particle diameter of 30 µm or more, whereas the term "resin fine particles" is used to refer to particles having a particle diameter of less than 30 µm.

Examples of the vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

### [Vinyl chloride resin particles]

In the resin composition, the vinyl chloride resin particles normally function as a matrix resin (base material). The vinyl chloride resin particles are preferably produced by suspension polymerization.

### -Average degree of polymerization-

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. When the average degree of polymerization of the vinyl chloride resin forming the vinyl chloride resin particles is not less than any of the lower limits set forth above, sufficient physical strength of a resin molded product formed using the resin composition can be ensured while also improving tensile characteristics (particularly tensile elongation) of the resin molded product, for example. A resin molded product having good tensile elongation can suitably be used as an automobile interior material, such as a surface skin of an automobile instrument panel, that has excellent ductility and that ruptures as designed without scattering of fragments when an airbag expands and is deployed, for example. On the other hand, when the average degree of polymerization of the vinyl chloride resin forming the vinyl chloride resin particles is not more than any of the upper limits set forth above, meltability of the resin composition can be improved.

Moreover, the average degree of polymerization of the vinyl chloride resin forming the vinyl chloride resin particles may be 1,300 or more, or may be 1,300 or less.

The "average degree of polymerization" referred to in the present disclosure can be measured in accordance with JIS K6720-2.

### -Average particle diameter-

The average particle diameter of the vinyl chloride resin particles is normally 30 µm or more, preferably 50 µm or more, and more preferably 100 µm or more, and is preferably 500 µm or less, and more preferably 200 µm or less. When the average particle diameter of the vinyl chloride resin particles is not less than any of the lower limits set forth above, powder fluidity of the resin composition can be improved. On the other hand, when the average particle diameter of the vinyl chloride resin particles is not more than any of the upper limits set forth above, meltability of the resin composition can be improved, and surface smoothness of a formed resin molded product can be improved.

Moreover, the average particle diameter of the vinyl chloride resin particles may be 115 µm or more, or may be 115 µm or less.

The "average particle diameter" referred to in the present disclosure can be measured as the volume-average particle diameter by laser diffraction in accordance with JIS Z8825.

### -Proportional content-

The proportional content of the vinyl chloride resin particles in the vinyl chloride resin is preferably 70 mass% or more, and more preferably 80 mass% or more, can be 100 mass%, and is preferably 95 mass% or less, and more preferably 90 mass% or less. When the proportional content of the vinyl chloride resin particles in the vinyl chloride resin is not less than any of the lower limits set forth above, sufficient physical strength of a resin molded product formed using the resin composition can be ensured while also improving tensile elongation of the resin molded product. On the other hand, when the proportional content of the vinyl chloride resin particles in the vinyl chloride resin is not more than any of the upper limits set forth above, powder fluidity of the resin composition can be improved.

### [Vinyl chloride resin fine particles]

In the resin composition, the vinyl chloride resin fine particles normally function as a dusting agent (powder fluidity modifier). The vinyl chloride resin fine particles are preferably produced by emulsion polymerization.

### -Average degree of polymerization-

The average degree of polymerization of a vinyl chloride resin forming the vinyl chloride resin fine particles is preferably 500 or more, and more preferably 700 or more, and is preferably 2,600 or less, and more preferably 2,400 or less. When the average degree of polymerization of the vinyl chloride resin forming the vinyl chloride resin fine particles serving as a dusting agent is not less than any of the lower limits set forth above, powder fluidity of the resin composition can be improved, and tensile elongation of a formed resin molded product can be improved. On the other hand, when the average degree of polymerization of the vinyl chloride resin forming the vinyl chloride resin fine particles is not more than any of the upper limits set forth above, meltability of the resin composition can be improved, and surface smoothness of a formed resin molded product can be improved.

Moreover, the average degree of polymerization of the vinyl chloride resin forming the vinyl chloride resin fine particles may be 800 or more, or may be 800 or less.

### -Average particle diameter-

The average particle diameter of the vinyl chloride resin fine particles is normally less than 30 µm, preferably 10 µm or less, and more preferably 5 µm or less, and is preferably 0.1 µm or more, and more preferably 1 µm or more. When the average particle diameter of the vinyl chloride resin fine particles is not less than any of the lower limits set forth above, the vinyl chloride resin fine particles are not too small to function as a dusting agent, for example, and powder fluidity of the resin composition can be improved. On the other hand, when the average particle diameter of the vinyl chloride resin fine particles is not more than any of the upper limits set forth above, meltability of the resin composition can be improved, and surface smoothness of a formed resin molded product can be improved.

Moreover, the average particle diameter of the vinyl chloride resin fine particles may be 1.8 µm or more, or may be 1.8 µm or less.

### -Proportional content-

The proportional content of the vinyl chloride resin fine particles in the vinyl chloride resin may be 0 mass%, but is preferably 5 mass% or more, and more preferably 10 mass% or more, and is preferably 30 mass% or less, and more preferably 20 mass% or less. When the proportional content of the vinyl chloride resin fine particles in the vinyl chloride resin is not less than any of the lower limits set forth above, powder fluidity of the resin composition can be improved. On the other hand, when the proportional content of the vinyl chloride resin fine particles in the vinyl chloride resin is not more than any of the upper limits set forth above, physical strength of a formed resin molded product can be increased.

### <(b) Plasticizer composition>

A feature of the (b) presently disclosed plasticizer composition is that it contains: (b1) a polyester plasticizer; and (b2) either or both of a phenol represented by the following formula (I) and a modified product thereof (hereinafter, also referred to simply as the "(b2) phenol and/or modified product thereof'). 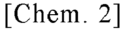 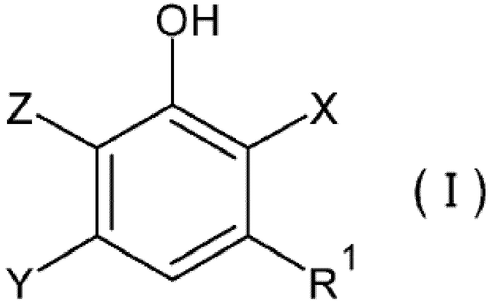 (In formula (I), X is a hydrogen atom or a carboxy group, Y is a hydrogen atom or a hydroxy group, Z is a hydrogen atom or a methyl group, and R¹ is an optionally substituted hydrocarbon group.)

Note that the (b) presently disclosed plasticizer composition may further contain plasticizers other than the (b1) polyester plasticizer and the (b2) phenol and/or modified product thereof (hereinafter, also referred to as "(b3) other plasticizers").

As a result of the resin composition containing the (b) presently disclosed plasticizer composition, a resin molded product that is formed using the resin composition can display excellent adhesiveness to a foamed polyurethane molded product.

### <(b1) Polyester plasticizer>

The (b1) polyester plasticizer is a component that can function as a plasticizer in a resin molded product that is formed using the resin composition containing the (b) plasticizer composition and that can impart adequate tensile characteristics (for example, tensile elongation, tensile strength, etc.) to the resin molded product. Moreover, in a situation in which a laminate is formed by lining a resin molded product formed using the resin composition with a foamed polyurethane molded product, the use of the (b1) polyester plasticizer makes it possible to improve heat shrinkage resistance of the resin molded product because the (b1) polyester plasticizer tends not to migrate to the foamed polyurethane molded product from the resin molded product even at high temperature.

A polyester such as a polyester including a structural unit derived from adipic acid (adipic acid polyester), a polyester including a structural unit derived from sebacic acid (sebacic acid polyester), or a polyester including a structural unit derived from phthalic acid (phthalic acid polyester), for example, can be used as the (b1) polyester plasticizer without any specific limitations. One of these polyesters may be used individually, or two or more of these polyesters may be used as a mixture in a freely selected ratio.

In particular, from a viewpoint of further increasing heat shrinkage resistance of a resin molded product, it is preferable that an adipic acid polyester (polyester including an adipic acid-derived structural unit) is used as the (b1) polyester plasticizer.

The viscosity of the (b1) polyester plasticizer is preferably 500 mPa·s or more, and more preferably 1,000 mPa·s or more, and is preferably 8,000 mPa·s or less, and more preferably 5,000 mPa·s or less.

Moreover, the viscosity of the (b1) polyester plasticizer may be 3,000 mPa·s or more, or may be 3,000 mPa·s or less.

Note that the "viscosity" can be measured in accordance with JIS Z8803 at a temperature of 25°C.

The content of the (b 1) polyester plasticizer in the resin composition is preferably 30 parts by mass or more, more preferably 50 parts by mass or more, even more preferably 70 parts by mass or more, further preferably 80 parts by mass or more, and even further preferably 90 parts by mass or more relative to 100 parts by mass of the (a) resin, and is preferably 200 parts by mass or less, more preferably 180 parts by mass or less, even more preferably 150 parts by mass or less, further preferably 130 parts by mass or less, even further preferably 110 parts by mass or less, and particularly preferably 100 parts by mass or less relative to 100 parts by mass of the (a) resin. When the content of the (b1) polyester plasticizer in the resin composition is not less than any of the lower limits set forth above, heat shrinkage resistance of a formed resin molded product can be improved. On the other hand, when the content of the (b1) polyester plasticizer in the resin composition is not more than any of the upper limits set forth above, sufficiently high adhesiveness of a formed resin molded product to a foamed polyurethane molded product can be ensured.

### <<(b2) Phenol and/or modified product thereof>>

The (b) presently disclosed plasticizer composition contains (b2) either or both of a phenol represented by the following formula (I) and a modified product thereof. 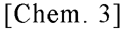 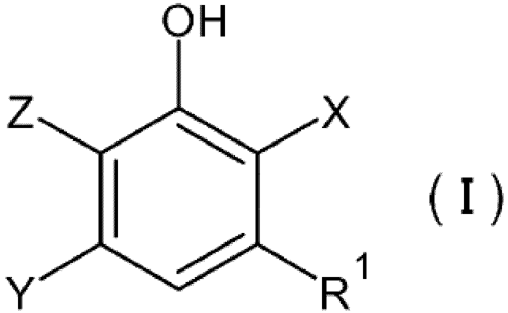 (In formula (I), X is a hydrogen atom or a carboxy group, Y is a hydrogen atom or a hydroxy group, Z is a hydrogen atom or a methyl group, and R¹ is an optionally substituted hydrocarbon group.)

The (b2) phenol and/or modified product thereof is a component that can function as a plasticizer in a resin molded product formed using the resin composition containing the (b) plasticizer composition and that can improve adhesiveness of the resin molded product to a foamed polyurethane molded product. Moreover, by using the (b2) phenol and/or modified product thereof, it is possible to improve tensile characteristics (for example, tensile elongation, tensile strength, etc.) at low temperature of a formed resin molded product.

Although X in formula (I) may be a hydrogen atom or a carboxy group, it is preferable that X is a hydrogen atom from a viewpoint of further improving adhesiveness of a formed resin molded product to a foamed polyurethane molded product.

Moreover, although Y in formula (I) may be a hydrogen atom or a hydroxy group, it is preferable that Y is a hydrogen atom from a viewpoint of further improving adhesiveness of a formed resin molded product to a foamed polyurethane molded product.

Furthermore, although Z in formula (I) may be a hydrogen atom or a methyl group, it is preferable that Z is a hydrogen atom from a viewpoint of further improving adhesiveness of a formed resin molded product to a foamed polyurethane molded product.

Note that no specific limitations are placed on the combination of X, Y, and Z in formula (I).

For example, a phenol represented by the following formula (Ia): 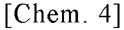 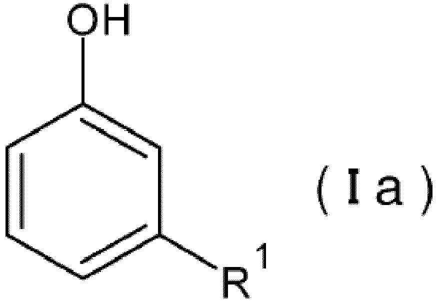 for which X, Y, and Z are each a hydrogen atom, a phenol represented by the following formula (Ib): 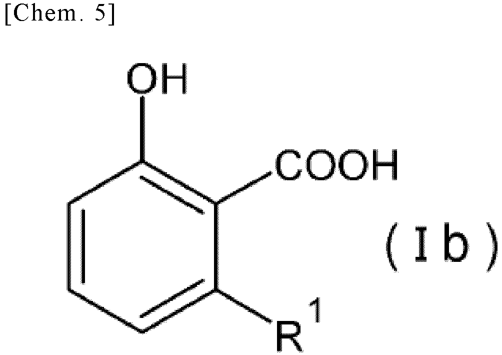 for which X is a carboxy group and Y and Z are each a hydrogen atom, a phenol represented by the following formula (Ic): 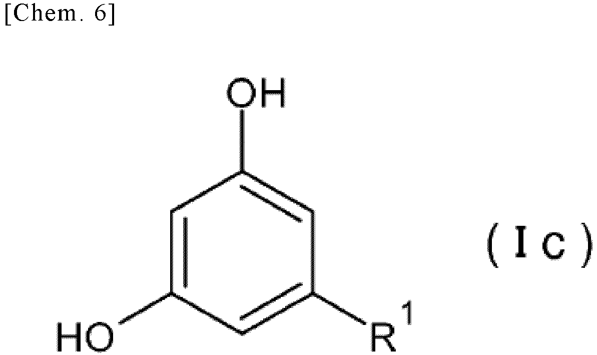 for which X and Z are each a hydrogen atom and Y is a hydroxy group, or a phenol represented by the following formula (Id): 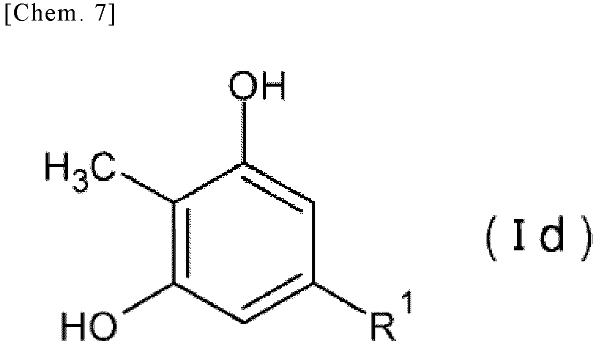 for which X is a hydrogen atom, Y is a hydroxy group, and Z is a methyl group can be used as the phenol represented by the preceding formula (I).

Although the (unsubstituted) hydrocarbon group that is a constituent of R¹ (optionally substituted hydrocarbon group) in formula (I) may be a cyclic hydrocarbon group or a chain hydrocarbon group, it is preferable that this hydrocarbon group is a chain hydrocarbon group from a viewpoint of further improving adhesiveness of a formed resin molded product to a foamed polyurethane molded product. Moreover, although the chain hydrocarbon group may be linear or may be branched, it is preferable that the chain hydrocarbon group is linear from a viewpoint of even further improving adhesiveness of a formed resin molded product to a foamed polyurethane molded product.

The hydrocarbon group may or may not include an unsaturated bond (carbon-carbon double bond or carbon-carbon triple bond).

Moreover, from a viewpoint of further improving adhesiveness of a formed resin molded product to a foamed polyurethane molded product, the carbon number of the hydrocarbon group is preferably 5 or more, more preferably 8 or more, even more preferably 10 or more, further preferably 12 or more, and even further preferably 14 or more, and is preferably 25 or less, more preferably 23 or less, even more preferably 20 or less, further preferably 18 or less, and even further preferably 16 or less.

In a case in which R¹ in formula (I) is a hydrocarbon group that includes a substituent, the substituent is not specifically limited and may be a halogen atom (chlorine atom, fluorine atom, etc.), a hydroxy group, or the like, for example. Note that R¹ may include just one of these types of substituents or may include two or more of these types of substituents. Also note that R¹ may include one substituent or may include two or more substituents.

From a viewpoint of further improving adhesiveness of a formed resin molded product to a foamed polyurethane molded product, it is preferable that R¹ in formula (I) is a hydrocarbon group that does not include a substituent.

The presently disclosed plasticizer composition contains either or both of a phenol represented by formula (I) and a modified product thereof, but preferably contains at least a modified product of a phenol represented by formula (I) from a viewpoint of further improving heat shrinkage resistance, adhesiveness to a foamed polyurethane molded product, and tensile characteristics at low temperature of a formed resin molded product.

The modified product of the phenol represented by formula (I) may be an epoxy modified product, an alkylene oxide modified product, an alkoxy modified product, an ester modified product, an ether modified product, or the like, for example, without any specific limitations. Moreover, from a viewpoint of even further improving heat shrinkage resistance, adhesiveness to a foamed polyurethane molded product, and tensile characteristics at low temperature of a formed resin molded product, it is preferable to use an alkylene oxide modified product as the modified product of the phenol represented by formula (I) .

Note that the modified product of the phenol represented by formula (I) can be obtained by modifying the phenol by a known method using a modifying agent.

The epoxy modified product of the phenol represented by formula (I) is a compound in which a hydroxy group (-OH) in formula (I) is substituted by a functional group including an epoxy ring, such as a glycidyloxy group (-O-CH₂-(C₂H₃O)), for example.

The alkylene oxide modified product of the phenol represented by formula (I) is a compound in which a hydroxy group (-OH) in formula (I) is substituted by a functional group represented by formula (II): -(O-R²)ₙ-OH (in formula (II), R² is an alkylene group and n is an integer of 1 or more).

From a viewpoint of even further improving heat shrinkage resistance, adhesiveness to a foamed polyurethane molded product, and tensile characteristics at low temperature of a formed vinyl chloride composition, the carbon number of the alkylene group R² in formula (II) is preferably 2 or more, and is preferably 5 or less, more preferably 4 or less, even more preferably 3 or less, and particularly preferably 2. In other words, the alkylene oxide modified product of the phenol represented by formula (I) is particularly preferably an ethylene oxide modified product.

The number of repetitions n of the alkylene oxide unit (-(O-R²)-) in formula (II) is preferably 1 or more, more preferably 2 or more, even more preferably 3 or more, further preferably 5 or more, even further preferably 8 or more, and yet further preferably 10 or more, and is preferably 30 or less, more preferably 25 or less, even more preferably 20 or less, further preferably 18 or less, and even further preferably 16 or less. When the number of repetitions n of the alkylene oxide unit is within any of the specific ranges set forth above, heat shrinkage resistance, adhesiveness to a foamed polyurethane molded product, and tensile characteristics at low temperature of a formed vinyl chloride composition can be even further improved.

Note that in a case in which two or more hydroxy groups are present in a molecule of the phenol compound represented by formula (I), at least one of the two or more hydroxy groups is substituted by a functional group such as described above in the modified product of the phenol compound.

Moreover, from a viewpoint of further improving heat shrinkage resistance, adhesiveness to a foamed polyurethane molded product, and tensile characteristics at low temperature of a formed vinyl chloride composition, the presently disclosed plasticizer composition preferably contains either or both of a phenol for which X, Y, and Z are each a hydrogen atom in formula (I), which in other words is a phenol represented by the following formula (Ia): 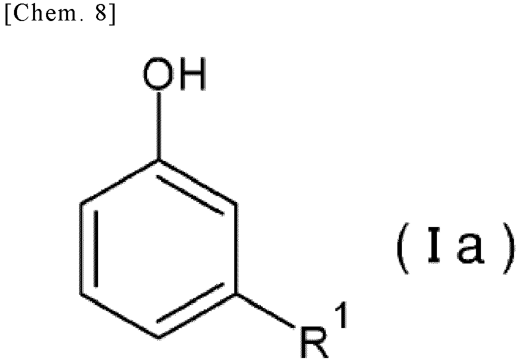 or a modified product thereof as the (b2) phenol and/or modified product thereof, more preferably contains at least a modified product of the phenol represented by formula (Ia) as the (b2) phenol and/or modified product thereof, even more preferably contains an alkylene oxide modified product of the phenol represented by formula (Ia), which in other words is a compound represented by the following formula (Ia-1): 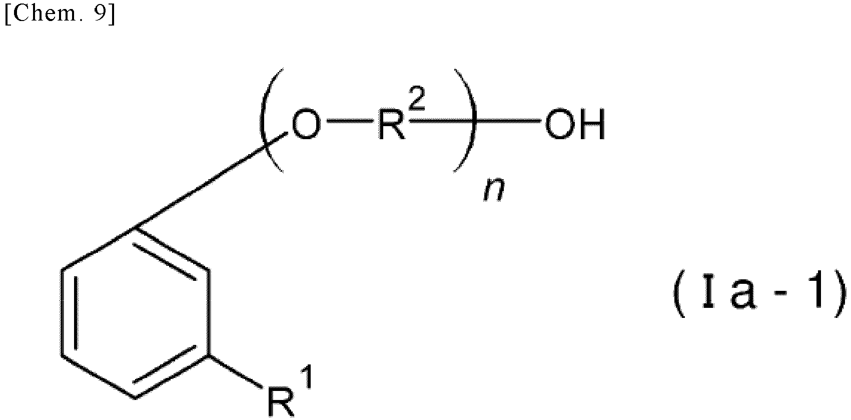 as the (b2) phenol and/or modified product thereof, and particularly preferably contains an ethylene oxide modified product of the phenol represented by formula (Ia), which in other words is a compound represented by the following formula (Ia-2): 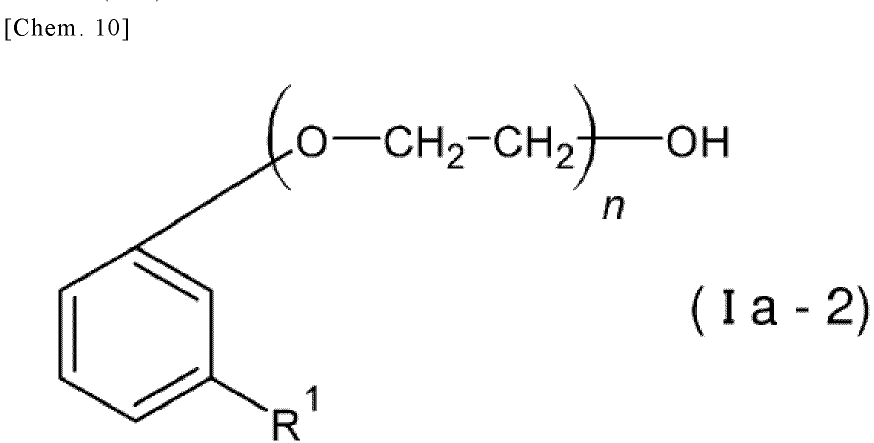 as the (b2) phenol and/or modified product thereof. Note that in formulae (Ia), (Ia-1), and (Ia-2), R¹ is the same as in formula (I), and R² and n are the same as in formula (II).

The (b2) phenol and/or modified product thereof may be obtained through chemical synthesis or may be obtained through extraction or the like from a natural material and further treatment thereof by modification or the like, as necessary, without any specific limitations.

Specific examples of the (b2) phenol and/or modified product thereof include cashew nut shell liquid, cardanol, anacardic acid, cardol, 2-methylcardol, and modified products thereof.

Cashew nut shell liquid (also referred to as "CNSL") is a liquid component obtained from the shell of cashew nuts and is a mixture that contains cardanol, anacardic acid, cardol, 2-methylcardol, and so forth mentioned above.

Cardanol is a compound represented by formula (Ia): 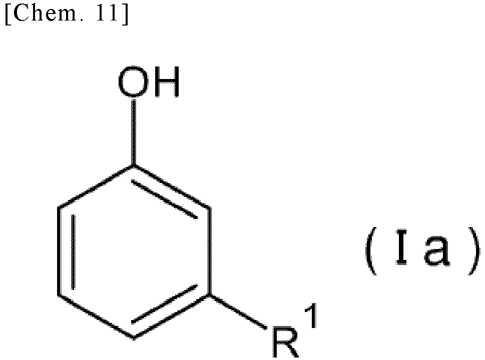 where R¹ is a linear chain hydrocarbon group having a carbon number of 15.

Anacardic acid is a compound represented by formula (Ib): 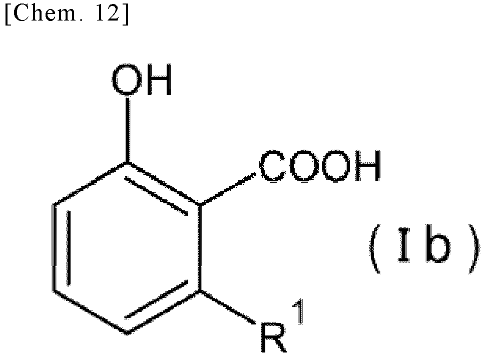 where R¹ is a linear chain hydrocarbon group having a carbon number of 15.

Cardol is a compound represented by formula (Ic): 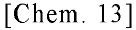 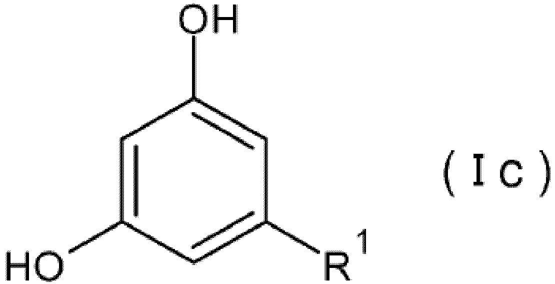 where R¹ is a linear chain hydrocarbon group having a carbon number of 15.

2-Methylcardol is a compound represented by formula (Id): 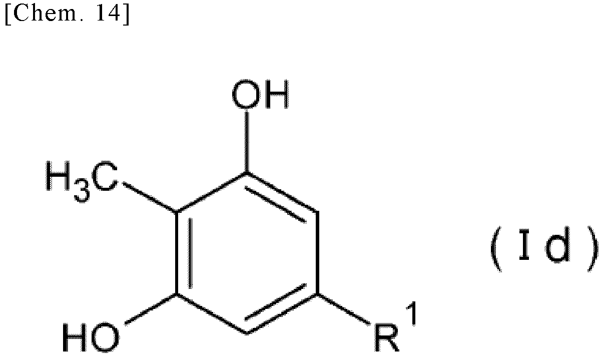 where R¹ is a linear chain hydrocarbon group having a carbon number of 15.

Moreover, the linear chain hydrocarbon group R¹ having a carbon number of 15 that is included in each of cardanol, anacardic acid, cardol, and 2-methylcardol may be any one of:

-(CH₂)₁₄CH₃;

-(CH₂)₇CH=CH(CH₂)₅CH₃;

-(CH₂)₇CH=CHCH₂CH=CH(CH₂)₂CH₃;

-(CH₂)₇CH=CHCH₂CH=CHCH=CHCH₃; and

-(CH₂)₇CH=CHCH₂CH=CHCH₂CH=CH₂.

Note that each of cardanol, anacardic acid, cardol, and 2-methylcardol may be a single compound for which R¹ is just one of the above-described structures or may be a mixture of two or more compounds differing only in terms of the structure of R¹.

In particular, from a viewpoint of further improving heat shrinkage resistance, adhesiveness to a foamed polyurethane molded product, and tensile characteristics at low temperature of a formed resin molded product, it is preferable to use cardanol and/or a modified product thereof, more preferable to use a modified product of cardanol, even more preferable to use an alkylene oxide modified product of cardanol, and particularly preferable to use an ethylene oxide modified product of cardanol.

The above-described (b2) phenol and/or modified product may be one type thereof used individually or may be a mixture of two or more types thereof in a freely selected ratio.

The content of the (b2) phenol and/or modified product thereof in the (b) plasticizer composition is preferably 1 part by mass or more, more preferably 1.5 parts by mass or more, even more preferably 2 parts by mass or more, further preferably 2.5 parts by mass or more, even further preferably 3 parts by mass or more, and particularly preferably 4 parts by mass or more relative to 100 parts by mass of the (b1) polyester plasticizer, and is preferably 20 parts by mass or less, more preferably 15 parts by mass or less, even more preferably 10 parts by mass or less, further preferably 8 parts by mass or less, even further preferably 6 parts by mass or less, and particularly preferably 5 parts by mass or less relative to 100 parts by mass of the (b1) polyester plasticizer. When the content of the (b2) phenol and/or modified product thereof in the (b) plasticizer composition is not less than any of the lower limits set forth above, adhesiveness to a foamed polyurethane molded product and tensile characteristics at low temperature of a formed resin molded product can be further improved. On the other hand, when the content of the (b2) phenol and/or modified product thereof in the (b) plasticizer composition is not more than any of the upper limits set forth above, sufficiently high heat shrinkage resistance of a formed resin molded product can be ensured.

Moreover, the content of the (b2) phenol and/or modified product thereof in the (b) plasticizer composition may be 4 parts by mass or less, may be 3 parts by mass or less, may be 2.5 parts by mass or less, or may be 2 parts by mass or less relative to 100 parts by mass of the (b1) polyester plasticizer.

Furthermore, the content of the (b2) phenol and/or modified product thereof in the resin composition is preferably 1 part by mass or more, more preferably 1.5 parts by mass or more, even more preferably 2 parts by mass or more, further preferably 2.5 parts by mass or more, even further preferably 3 parts by mass or more, and particularly preferably 4 parts by mass or more relative to 100 parts by mass of the (a) resin, and is preferably 20 parts by mass or less, more preferably 15 parts by mass or less, even more preferably 10 parts by mass or less, further preferably 8 parts by mass or less, even further preferably 6 parts by mass or less, and particularly preferably 5 parts by mass or less relative to 100 parts by mass of the (a) resin. When the content of the (b2) phenol and/or modified product thereof in the resin composition is not less than any of the lower limits set forth above, adhesiveness to a foamed polyurethane molded product and tensile characteristics at low temperature of a formed resin molded product can be further improved. On the other hand, when the content of the (b2) phenol and/or modified product thereof in the resin composition is not more than any of the upper limits set forth above, sufficiently high heat shrinkage resistance of a formed resin molded product can be ensured.

Moreover, the content of the (b2) phenol and/or modified product thereof in the resin composition may be 4 parts by mass or less, may be 3 parts by mass or less, may be 2.5 parts by mass or less, or may be 2 parts by mass or less relative to 100 parts by mass of the (a) resin.

### <(b3) Other plasticizers>

The (b) presently disclosed plasticizer composition may optionally further contain (b3) other plasticizers besides the (b1) polyester plasticizer and the (b2) phenol and/or modified product thereof described above.

Specific examples of the (b3) other plasticizers include plasticizers other than the (b1) polyester plasticizer and the (b2) phenol and/or modified product thereof described above from among plasticizers that are described in WO2016/098344A1. In particular, from a viewpoint of further enhancing tensile characteristics at low temperature of a formed resin molded product, it is preferable to use epoxidized vegetable oil, and more preferable to use epoxidized soybean oil.

The content of the (b3) other plasticizers in the (b) plasticizer composition is not specifically limited, but can be set as not less than 0 parts by mass and not more than 15 parts by mass relative to 100 parts by mass of the (b1) polyester plasticizer.

In a case in which epoxidized vegetable oil such as epoxidized soybean oil is used as (b3) another plasticizer, the content of the epoxidized vegetable oil as (b3) another plasticizer is preferably 2 parts by mass or more, more preferably 3 parts by mass or more, and even more preferably 4 parts by mass or more relative to 100 parts by mass of the (b1) polyester plasticizer, and is preferably 10 parts by mass or less, more preferably 7 parts by mass or less, and even more preferably 5 parts by mass or less relative to 100 parts by mass of the (b1) polyester plasticizer from a viewpoint of even further improving tensile characteristics at low temperature of a formed resin molded product while also ensuring sufficiently high heat shrinkage resistance of the resin molded product.

The content of the (b3) other plasticizers in the resin composition is not specifically limited, but can be set as not less than 0 parts by mass and not more than 15 parts by mass relative to 100 parts by mass of the (a) resin.

Moreover, in a case in which epoxidized vegetable oil such as epoxidized soybean oil is used as (b3) another plasticizer, the content of the epoxidized vegetable oil as (b3) another plasticizer is preferably 2 parts by mass or more, more preferably 3 parts by mass or more, and even more preferably 4 parts by mass or more relative to 100 parts by mass of the (a) resin, and is preferably 10 parts by mass or less, and more preferably 7 parts by mass or less relative to 100 parts by mass of the (a) resin from a viewpoint of even further improving tensile characteristics at low temperature of a formed resin molded product while also ensuring sufficiently high heat shrinkage resistance of the resin molded product.

Note that the total content of the (b1) polyester plasticizer, the (b2) phenol and/or modified product thereof, and the (b3) other plasticizers (i.e., the content of the (b) plasticizer composition) in the resin composition is preferably 31 parts by mass or more, more preferably 53.5 parts by mass or more, even more preferably 75 parts by mass or more, further preferably 86.5 parts by mass or more, and even further preferably 97 parts by mass or more relative to 100 parts by mass of the resin, and is preferably 235 parts by mass or less, more preferably 205 parts by mass or less, even more preferably 167 parts by mass or less, further preferably 145 parts by mass or less, even further preferably 123 parts by mass or less, and particularly preferably 113 parts by mass or less relative to 100 parts by mass of the resin. When the content of the plasticizer composition in the resin composition is within any of the specific ranges set forth above, it is easy to perform molding (for example, powder molding) of the resin composition, and a balance of high levels of heat shrinkage resistance, adhesiveness to a foamed polyurethane molded product, and tensile characteristics at low temperature of a formed resin molded product can be achieved.

### <Additives>

The presently disclosed resin composition may further contain various additives besides the components set forth above. Examples of additives that may be used include, but are not specifically limited to, lubricants; stabilizers such as perchloric acid-treated hydrotalcite, zeolites, β-diketones, and fatty acid metal salts; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed resin composition, and suitable amounts thereof can also be the same as described in WO2016/098344A1.

### <Production method of resin composition>

The presently disclosed resin composition can be produced by mixing the components set forth above.

The mixing method of the (a) resin, the (b) plasticizer composition, and various additives that are further compounded as necessary may be a method in which components other than a dusting agent (inclusive of vinyl chloride resin fine particles) are mixed by dry blending and then the dusting agent is subsequently added and mixed, but is not specifically limited thereto. The dry blending is preferably carried out using a Henschel mixer. Although the temperature during dry blending is not specifically limited, the temperature is preferably 50°C or higher, and more preferably 70°C or higher, and is preferably 200°C or lower.

### <Use of resin composition>

The obtained resin composition can suitably be used in powder molding, and can more suitably be used in powder slush molding.

### (Resin molded product)

A feature of the presently disclosed resin molded product is that it is obtained by molding the resin composition set forth above by any method. As a result of the presently disclosed resin molded product being formed using the resin composition set forth above, the presently disclosed resin molded product normally contains at least the (a) resin and the (b) plasticizer composition. In other words, the presently disclosed resin molded product normally contains at least the (a) resin, the (b 1) polyester plasticizer, and the (b2) phenol and/or modified product thereof. Moreover, the presently disclosed resin molded product has excellent adhesiveness to a foamed polyurethane molded product. Consequently, in a situation in which the presently disclosed resin molded product is lined with a foamed polyurethane molded product, it is possible to form a laminate in which the resin molded product and the foamed polyurethane molded product adhere well and are not easily peeled apart. Furthermore, the presently disclosed resin molded product also has excellent heat shrinkage resistance and tensile characteristics at low temperature.

Therefore, the presently disclosed resin molded product can suitably be used as an automobile interior material such as a surface skin of an automobile instrument panel.

### <Formation method of resin molded product>

Although no specific limitations are placed on the mold temperature in powder slush molding in a situation in which the resin molded product is formed by powder slush molding, the mold temperature is preferably 200°C or higher, and more preferably 220°C or higher, and is preferably 300°C or lower, and more preferably 280°C or lower.

The following method, for example, may be used in production of the resin molded product without any specific limitations. In this method, the presently disclosed resin composition is sprinkled onto a mold having a temperature within any of the ranges set forth above. The resin composition is initially left for not less than 5 seconds and not more than 30 seconds and, after shaking off any excess resin composition, is then further left for not less than 30 seconds and not more than 3 minutes at an arbitrary temperature. The mold is subsequently cooled to a temperature of not lower than 10°C and not higher than 60°C, and the presently disclosed resin molded product that is obtained is removed from the mold. A sheet-shaped molded product that imitates the shape of the mold is obtained.

### (Laminate)

The presently disclosed laminate includes a foamed polyurethane molded product and the resin molded product set forth above. Note that the resin molded product typically constitutes one surface of the laminate.

As a result of the presently disclosed laminate including a resin molded product that is formed using the presently disclosed resin composition and that has excellent adhesiveness to a foamed polyurethane molded product, for example, the resin molded product and the foamed polyurethane molded product are adhered well and are not easily peeled apart. Therefore, the presently disclosed laminate can suitably be used as an automobile interior material forming an automobile interior component (particularly an automobile instrument panel).

The method by which the foamed polyurethane molded product and the resin molded product are stacked is not specifically limited and may, for example, be a method such as described below. Specifically, (1) a method in which the foamed polyurethane molded product and the resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the resin molded product while carrying out polyurethane foaming by a commonly known method to directly form the foamed polyurethane molded product on the resin molded product may be adopted. The latter method (2) is more suitable because it involves a simple process and enables laminates of various different shapes to be obtained while easily achieving strong adhesion of the resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, the following methods were used to measure and evaluate the tensile characteristics at low temperature, heat shrinkage resistance, and adhesiveness to a foamed polyurethane molded product of a vinyl chloride resin molded sheet (vinyl chloride resin molded product).

### <Tensile characteristics (tensile strength and tensile elongation) at low temperature>

### [Initial]

An obtained vinyl chloride resin molded sheet was punched out by a No. 1 Dumbbell described in JIS K6251, and then tensile breaking elongation (%) and tensile breaking stress (MPa) at low temperature (-25°C) were measured in accordance with JIS K7113 with a tensing rate of 200 mm/min. Note that a larger value for tensile breaking elongation indicates that the vinyl chloride resin molded sheet has better initial (unheated) tensile elongation at low temperature. Also note that a larger value for tensile breaking stress indicates that the vinyl chloride resin molded sheet has better initial (unheated) tensile strength at low temperature.

### [Post-heating (heat aging test)]

A laminate lined with a foamed polyurethane molded product was used as a sample. The sample was placed inside an oven and was heated in an environment having a temperature of 130°C for 100 hours. Next, the foamed polyurethane molded product was peeled from the post-heating laminate to prepare just a vinyl chloride resin molded sheet. The tensile breaking elongation (%) and tensile breaking stress (MPa) of the vinyl chloride resin molded sheet after 100 hours of heating were measured under the same conditions as for the initial state described above. A larger value for tensile breaking elongation indicates that the vinyl chloride resin molded sheet has better post-heating (heat aging test) tensile elongation at low temperature. Moreover, a larger value for tensile breaking stress indicates that the vinyl chloride resin molded sheet has better post-heating (heat aging test) tensile strength at low temperature.

### <Heat shrinkage resistance>

A 3D coordinate measuring machine (Crysta-Plus M443 produced by Mitutoyo Corporation) was used to measure the transverse direction length of a vinyl chloride resin molded sheet in an obtained laminate so as to determine an actual measurement value for before heating.

Thereafter, the laminate was stored and heated in a 120°C Geer-type oven (Geer Oven produced by Toyo Seiki Seisaku-Sho, Ltd.). Once 600 hours had passed, the laminate was removed from the oven, and the transverse direction length of the vinyl chloride resin molded sheet in the laminate was measured by the 3D coordinate measuring machine to determine an actual measurement value for after heating. The actual measurement values for before and after heating were used to calculate a heat shrinkage rate (%) indicated by the following formula.

Heat shrinkage rate [%] = 100 × (Actual measurement value for before heating - Actual measurement value for after heating)/Actual measurement value for before heating

Note that a smaller value for the heat shrinkage rate indicates that there is less heat shrinkage of the vinyl chloride resin molded sheet and that the vinyl chloride resin molded sheet has better heat shrinkage resistance.

### <Adhesiveness to foamed polyurethane molded product>

Using an obtained laminate in which a vinyl chloride resin molded sheet was lined with a foamed polyurethane molded product, the vinyl chloride resin molded sheet was peeled from the foamed polyurethane molded product. After peeling, a surface of the vinyl chloride resin molded sheet that had been lined with the foamed polyurethane molded product among surfaces of the vinyl chloride resin molded sheet was visually checked, and adhesiveness of the vinyl chloride resin molded sheet (vinyl chloride resin molded product) to the polyurethane molded product was evaluated.

An evaluation of "foam destruction" (evaluation "A" in Table 1) was given in a case in which a surface portion of the foamed polyurethane molded product remained over the entirety of the visually checked surface of the vinyl chloride resin molded sheet, an evaluation of "partial interfacial peeling" (evaluation "B" in Table 1) was given in a case in which a surface portion of the foamed polyurethane molded product remained at only some locations at the surface of the vinyl chloride resin molded sheet but did not remain at other locations, and an evaluation of "complete interfacial peeling" (evaluation "C" in Table 1) was given in a case in which a surface portion of the foamed polyurethane molded product did not remain at any location at the surface of the vinyl chloride resin molded sheet.

Note that when a surface portion of the foamed polyurethane molded product remains at more locations at the surface of the vinyl chloride resin molded sheet, this indicates that the vinyl chloride resin molded sheet (vinyl chloride resin molded product) has higher adhesiveness to the foamed polyurethane molded product.

### (Example 1)

### <Production of vinyl chloride resin composition>

With the exception of a plasticizer composition (polyester plasticizer, phenol and/or modified product thereof, and other plasticizers) and vinyl chloride resin fine particles used as a dusting agent, components indicated in Table 1 were loaded into and mixed in a Henschel mixer. At the point at which the temperature of the mixture rose to 80°C, all of the plasticizer composition was added, drying up of the mixture was caused to occur (i.e., the mixture changed to a dry state through absorption of the plasticizers by vinyl chloride resin particles used as a vinyl chloride resin), and mixing was continued until the maximum temperature reached not lower than 100°C and not higher than 200°C. Thereafter, once the dried-up mixture had cooled to a temperature of lower than 100°C, the vinyl chloride resin fine particles used as the dusting agent were added to the mixture to produce a vinyl chloride resin composition.

### <Formation of vinyl chloride resin molded sheet>

The obtained vinyl chloride resin composition was sprinkled onto a textured mold that was heated to a temperature of 250°C, and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a 200 mm × 150 mm × 1 mm vinyl chloride resin molded sheet was removed from the mold as a vinyl chloride resin molded product.

The obtained vinyl chloride resin molded sheet was used to evaluate initial (unheated) tensile characteristics (tensile strength and tensile elongation) at low temperature. The results are shown in Table 1.

### <Formation of laminate>

Two obtained vinyl chloride resin molded sheets (dimensions: 200 mm × 150 mm × 1 mm) were placed inside of a 200 mm × 300 mm × 10 mm mold with the textured surface facing downward.

Separately thereto, a polyol mixture containing 50 parts by mass of a propylene oxide/ethylene oxide (PO/EO) block adduct of propylene glycol (hydroxyl value: 28; terminal EO unit content: 10%; internal EO unit content: 4%), 50 parts by mass of a PO/EO block adduct of glycerin (hydroxyl value: 21; terminal EO unit content: 14%), 2.5 parts by mass of water, 0.2 parts by mass of an ethylene glycol solution of triethylenediamine (produced by Tosoh Corporation; product name: TEDA-L33), 1.2 parts by mass of triethanolamine, 0.5 parts by mass of triethylamine, and 0.5 parts by mass of a foam stabilizer (produced by Shin-Etsu Chemical Co., Ltd.; product name: F-122) was mixed with polymethylene polyphenylene polyisocyanate (polymeric MDI) in a ratio determined to give an index of 98 so as to prepare a mixed liquid. The prepared mixed liquid was poured onto the two vinyl chloride resin molded sheets that had been placed in the mold as described above. Thereafter, the mold was covered by a 348 mm × 255 mm × 10 mm aluminum plate to seal the mold. The mold was left for 5 minutes after sealing to form a laminate in which a vinyl chloride resin molded sheet (thickness: 1 mm) serving as a surface skin was lined with a foamed polyurethane molded product.

The formed laminate was removed from the mold, and post-heating (heat aging test) tensile characteristics at low temperature, heat shrinkage resistance, and adhesiveness to a foamed polyurethane molded product were evaluated for the vinyl chloride resin molded sheet in the laminate. The results are shown in Table 1.

### (Examples 2 to 11 and Comparative Examples 1 to 3)

A vinyl chloride resin composition, a vinyl chloride resin molded sheet, and a laminate were produced in the same way as in Example 1 with the exception that the formulation of the plasticizer composition used in production of the vinyl chloride resin composition was changed as indicated in Table 1. Moreover, the obtained vinyl chloride resin molded sheet and laminate were used to evaluate tensile characteristics at low temperature, heat shrinkage resistance, and adhesiveness to a foamed polyurethane molded product of the vinyl chloride resin molded sheet. The results are shown in Table 1.

Note that in Table 1, "EO modified" indicates "ethylene oxide modified".

**[Table 1]**

| | | | | | Comparative Example 1 | Comparative Example 2 | Comparative Example 3 | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|---|---|---|---|
| | Vinyl chloride resin | | Vinyl chloride resin particles⁽¹⁾ [parts by mass] | | 100 | 100 | 100 | 100 | 100 | 100 | 100 | 100 | 100 | 100 | 100 | 100 | 100 | 100 |
| | | | Vinyl chloride resin fine particles [parts by mass] | | 12 | 12 | 12 | 12 | 12 | 12 | 12 | 12 | 12 | 12 | 12 | 12 | 12 | 12 |
| | | Polyester plasticizer | Adipic acid polyester⁽³⁾ [parts by mass] | | 110 | 105 | 105 | 95 | 95 | 105 | 95 | 108 | 105 | 95 | 105 | 95 | 105 | 95 |
| | | Phenol and/or modified product thereof | Cardanol (unmodified)⁽⁴⁾ [parts by mass] | | - | - | - | 15 | - | - | - | - | - | - | - | - | - | - |
| | | | Epoxy modified cardanol⁽⁵⁾ [parts by mass] | | - | - | - | - | 15 | - | - | - | - | - | - | - | - | - |
| | | | EO modified cardanol (n=1)⁽⁶⁾ [parts by mass] | | - | - | - | - | - | 5 | 15 | - | - | - | - | - | - | - |
| | Plasticizer composition | | EO modified cardanol (n=7)⁽⁷⁾ [parts by mass] | | - | - | - | - | - | - | - | 2 | 5 | 15 | - | - | - | - |
| | | | EO modified cardanol (n=9)⁽⁸⁾ [parts by mass] | | - | - | - | - | - | - | - | - | - | - | 5 | 15 | - | - |
| Formulation | | | EO modified cardanol (n=12)⁽⁹⁾ [parts by mass] | | - | - | - | - | - | - | - | - | - | - | - | - | 5 | 15 |
| | | Other plasticizers | Trimellitic acid ester⁽¹⁰⁾ [parts by mass] | | - | 5 | - | - | - | - | - | - | - | - | - | - | - | - |
| | | | Di(2-ethylhexyl) dodecanedioate⁽¹¹⁾ [parts by mass] | | - | - | 5 | - | - | - | - | - | - | - | - | - | - | - |
| | | | Epoxidized soybean oil⁽¹²⁾ [parts by mass] | | 5 | 5 | 5 | 5 | 5 | 5 | 5 | 5 | 5 | 5 | 5 | 5 | 5 | 5 |
| | Stabilizer | | Perchloric acid-substituted hydrotalcite⁽¹³⁾ [parts by mass] | | 2.5 | 2.5 | 2.5 | 2.5 | 2.5 | 2.5 | 2.5 | 2.5 | 2.5 | 2.5 | 2.5 | 2.5 | 2.5 | 2.5 |
| | | | Zeolite⁽¹⁴⁾ [parts by mass] | | 1.5 | 1.5 | 1.5 | 1.5 | 1.5 | 1.5 | 1.5 | 1.5 | 1.5 | 1.5 | 1.5 | 1.5 | 1.5 | 1.5 |
| | | | Zinc stearate⁽¹⁵⁾ [parts by mass] | | 0.3 | 0.3 | 0.3 | 0.3 | 0.3 | 0.3 | 0.3 | 0.3 | 0.3 | 0.3 | 0.3 | 0.3 | 0.3 | 0.3 |
| | | | Hindered amine light stabilizer⁽¹⁶⁾ [parts by mass] | | 0.2 | 0.2 | 0.2 | 0.2 | 0.2 | 0.2 | 0.2 | 0.2 | 0.2 | 0.2 | 0.2 | 0.2 | 0.2 | 0.2 |
| | Mold release agent | | 12-Hydroxystearic acid⁽¹⁷⁾ [parts by mass] | | 0.4 | 0.4 | 0.4 | 0.4 | 0.4 | 0.4 | 0.4 | 0.4 | 0.4 | 0.4 | 0.4 | 0.4 | 0.4 | 0.4 |
| | Pigment | | Black⁽¹⁸⁾ [parts by mass] | | 3.80 | 3.80 | 3.80 | 3.80 | 3.80 | 3.80 | 3.80 | 3.80 | 3.80 | 3.80 | 3.80 | 3.80 | 3.80 | 3.80 |
| Content relative to 100 parts by mass of vinyl chloride resin | | Polyester plasticizer [parts by mass] | | | 98.21 | 93.75 | 93.75 | 84.82 | 84.82 | 93.75 | 84.82 | 96.43 | 93.75 | 84.82 | 93.75 | 84.82 | 93.75 | 84.82 |
| | | Phenol and/or modified product thereof [parts by mass] | | | - | - | - | 13.39 | 13.39 | 4.46 | 13.39 | 1.79 | 4.46 | 13.39 | 4.46 | 13.39 | 4.46 | 13.39 |
| | | Other plasticizers [parts by mass] | | | 4.46 | 8.93 | 8.93 | 4.46 | 4.46 | 4.46 | 4.46 | 4.46 | 4.46 | 4.46 | 4.46 | 4.46 | 4.46 | 4.46 |
| | | Total content of plasticizers [parts by mass] | | | 102.68 | 102.68 | 102.68 | 102.68 | 102.68 | 102.68 | 102.68 | 102.68 | 102.68 | 102.68 | 102.68 | 102.68 | 102.68 | 102.68 |
| Content relative to 100 parts by mass of polyester plasticizer | | Phenol and/or modified product thereof [parts by mass] | | | - | - | - | 15.79 | 15.79 | 4.76 | 15.79 | 1.85 | 4.76 | 15.79 | 4.76 | 15.79 | 4.76 | 15.79 |
| | | Other plasticizers [parts by mass] | | | 4.55 | 9.52 | 9.52 | 5.26 | 5.26 | 4.76 | 5.26 | 4.63 | 4.76 | 5.26 | 4.76 | 5.26 | 4.76 | 5.26 |
| Evaluation results | | Tensile characteristics at low temperature (-25°C) | Initial | Tensile breaking elongation [%] | 120 | 130 | 140 | 190 | 190 | 140 | 200 | 150 | 160 | 190 | 160 | 200 | 180 | 190 |
| | | | | Tensile breaking stress [MPa] | 21.0 | 20.0 | 20.0 | 20.5 | 20.5 | 20.0 | 20.5 | 20.5 | 20.0 | 20.0 | 20.0 | 20.5 | 20.0 | 20.0 |
| | | | After 100 hours heating at 130°C | Tensile breaking elongation [%] | 110 | 120 | 130 | 110 | 120 | 130 | 120 | 130 | 140 | 130 | 140 | 150 | 170 | 180 |
| | | | | Tensile breaking stress [MPa] | 21.5 | 20.5 | 20.5 | 21.5 | 22.5 | 22.0 | 23.0 | 22.0 | 22.0 | 22.0 | 21.0 | 21.0 | 20.5 | 21.5 |
| | | Heat shrinkage resistance | Heat shrinkage rate (after 600 hours heating at 120°C) [%] | | 1.7 | 23 | 23 | 4.0 | 3.7 | 2.3 | 3.9 | 1.8 | 2.1 | 3.7 | 2.0 | 3.4 | 1.8 | 30 |
| | | Adhesiveness to foamed polyurethane molded product | | | C | C | C | B | B | B | A | A | A | A | A | A | A | A |

(1) Product name: ZEST^{®} (ZEST is a registered trademark in Japan, other countries, or both) 1300SI (produced by suspension polymerization; average degree of polymerization: 1,300; average particle diameter: 115 µm); produced by Shin Dai-ichi Vinyl Corporation
(2) Product name: ZEST PQLTX (produced by emulsion polymerization; average degree of polymerization: 800; average particle diameter: 1.8 µm); produced by Shin Dai-ichi Vinyl Corporation
(3) Product name: ADK CIZER HPN-3130 (adipic acid polyester; viscosity (25°C): 3,000 mPa·s); produced by Adeka Corporation
(4) Product name: NX-2026 (unmodified cardanol); produced by Cardolite Corporation
(5) Product name: NC-513 (epoxy modified cardanol); produced by Cardolite Corporation
(6) Product name: LITE 2020 (ethylene oxide modified cardanol; number of repetitions n of ethylene oxide unit: 1); produced by Cardolite Corporation
(7) Product name: GX-5166 (ethylene oxide modified cardanol; number of repetitions n of ethylene oxide unit: 7); produced by Cardolite Corporation
(8) Product name: GX-5167 (ethylene oxide modified cardanol; number of repetitions n of ethylene oxide unit: 9) produced by Cardolite Corporation
(9) Product name: GX-5170 (ethylene oxide modified cardanol; number of repetitions n of ethylene oxide unit: 12) produced by Cardolite Corporation
(10) Product name: TRIMEX N-08; produced by Kao Corporation
(11) Product name: DODN; produced by Taoka Chemical Co., Ltd.
(12) Product name: ADK CIZER O-130S; produced by Adeka Corporation
(13) Product name: ALCAMIZER^{®} 5 (ALCAMIZER is a registered trademark in Japan, other countries, or both); produced by Kyowa Chemical Industry Co., Ltd.
(14) Product name: MIZUKALIZER DS; produced by Mizusawa Industrial Chemicals, Ltd.
(15) Product name: SAKAI SZ2000; produced by Sakai Chemical Industry Co., Ltd.
(16) Product name: ADK STAB LA-72; produced by Adeka Corporation
(17) Product name: ADK STAB LS-12; produced by Adeka Corporation
(18) Product name: DAP 4720 Black; produced by Dainichiseika Color and Chemicals Mfg. Co., Ltd.

It can be seen from Table 1 that it is possible to form a resin molded product having excellent adhesiveness to a foamed polyurethane molded product using the resin compositions of Examples 1 to 11, which each contain a plasticizer composition that contains a polyester plasticizer and either or both of a phenol having a specific structure and a modified product thereof.

In contrast, it can be seen that adhesiveness of a formed resin molded product to a foamed polyurethane molded product is poor when using the resin compositions of Comparative Examples 1 to 3, which each contain a plasticizer composition that contains neither a phenol having a specific structure nor a modified product thereof.

### INDUSTRIAL APPLICABILITY

According to the present disclosure, it is possible to provide a plasticizer composition with which it is possible to produce a resin composition that can form a resin molded product having excellent adhesiveness to a foamed polyurethane molded product.

Moreover, according to the present disclosure, it is possible to provide a resin composition that can form a resin molded product having excellent adhesiveness to a foamed polyurethane molded product.

Furthermore, according to the present disclosure, it is possible to provide a resin molded product having excellent adhesiveness to a foamed polyurethane molded product.

Also, according to the present disclosure, it is possible to provide a laminate including this resin molded product.

## Claims

1. A plasticizer composition comprising:
a polyester plasticizer; and
either or both of a phenol represented by formula (I), shown below, and a modified product thereof, 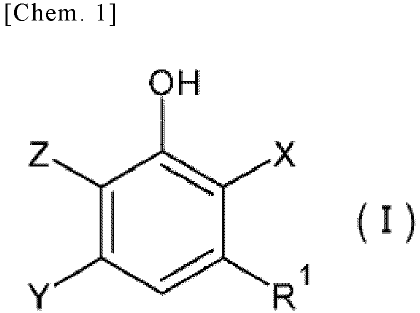 given that in formula (I), X is a hydrogen atom or a carboxy group, Y is a hydrogen atom or a hydroxy group, Z is a hydrogen atom or a methyl group, and R¹ is an optionally substituted hydrocarbon group.

2. The plasticizer composition according to claim 1, wherein R¹ is a chain hydrocarbon group having a carbon number of not less than 5 and not more than 25.

3. The plasticizer composition according to claim 1, comprising an alkylene oxide modified product of the phenol.

4. The plasticizer composition according to claim 3, wherein the alkylene oxide modified product of the phenol has a hydroxy group in formula (I) substituted by a functional group represented by formula (II): -(O-R²)ₙ-OH, given that in formula (II), R² is an alkylene group and n is an integer of 1 or more.

5. The plasticizer composition according to claim 4, wherein R² is an ethylene group.

6. The plasticizer composition according to claim 4, wherein n is an integer of not less than 1 and not more than 30.

7. The plasticizer composition according to claim 1, wherein the polyester plasticizer includes an adipic acid polyester.

8. The plasticizer composition according to claim 1, wherein content of the phenol and the modified product thereof is not less than 1 part by mass and not more than 20 parts by mass relative to 100 parts by mass of the polyester plasticizer.

9. A resin composition comprising:
a resin; and
the plasticizer composition according to any one of claims 1 to 8.

10. The resin composition according to claim 9, wherein the resin contains a halogen.

11. The resin composition according to claim 9, wherein the resin has a glass-transition temperature of not lower than 50°C and not higher than 100°C.

12. The resin composition according to claim 9, wherein the resin includes a vinyl chloride resin.

13. The resin composition according to claim 9, wherein content of the polyester plasticizer is not less than 30 parts by mass and not more than 200 parts by mass relative to 100 parts by mass of the resin.

14. The resin composition according to claim 9, wherein content of the phenol and the modified product thereof is not less than 1 part by mass and not more than 20 parts by mass relative to 100 parts by mass of the resin.

15. The resin composition according to claim 9 used in powder molding.

16. The resin composition according to claim 9 used in powder slush molding.

17. A resin molded product obtained through molding of the resin composition according to claim 9.

18. The resin molded product according to claim 17 for a surface skin of an automobile instrument panel.

19. A laminate comprising:
a foamed polyurethane molded product; and
the resin molded product according to claim 17.

20. The laminate according to claim 19 for an automobile instrument panel.
